# EUROPEAN PATENT SPECIFICATION

(11) **EP 3 301 980 B1**
(45) Date of publication and mention of the grant of the patent: **26.12.2018**
(21) Application number: 16191150.8
(22) Date of filing: 28.09.2016
(51) Int. Cl.: H04W 52/02

(54) **CONTROLLING AN RF FRONTEND USING CONTROL FORMAT INDICATOR PREDICTION**
STEUERUNG EINER HF-EINGANGSSTUFE MIT STEUERFORMATANZEIGEVORHERSAGE
COMMANDE D'UN DISPOSITIF FRONTAL RF A L'AIDE D'UNE PREDICTION D'INDICATEUR DE FORMAT DE COMMANDE

(43) Date of publication of application: 04.04.2018
(73) Proprietor: Intel IP Corporation, Santa Clara, CA 95054 (US)
(72) Inventor: RUDER, Michael, 91224 Pommelsbrunn (DE); BACHL, Rainer, 90425 Nürnberg (DE)
(74) Representative: Viering, Jentschura & Partner mbB Patent- und Rechtsanwälte

(56) References cited:
- US-A1- 2011 176 466
- US-A1- 2013 194 995
- US-A1- 2015 365 930
- ADEGBITE S A ET AL: "Improved PCFICH decoding in LTE systems", THE 21ST IEEE INTERNATIONAL WORKSHOP ON LOCAL AND METROPOLITAN AREA NETWORKS, IEEE, 22 April 2015 (2015-04-22), pages 1-6, XP032781694, DOI: 10.1109/LANMAN.2015.7114739 [retrieved on 2015-05-28]

## Description

### Technical Field

Embodiments described herein generally relate to the increased efficiency of battery power in user equipment within a Long Term Evolution ("LTE") network.

### Background

The LTE Physical Downlink Control Channel ("PDCCH") is transmitted in the first Orthogonal Frequency Division Multiplexing ("OFDM") symbols of a subframe. The number of OFDM symbols (up to 4) used to transmit the PDCCH is provided by the Control Format Indicator ("CFI") which is transmitted via the Physical Control Format Indicator Channel ("PCFICH"). The PCFICH itself is multiplexed into the first OFDM symbol of every subframe. The PDCCH must be decoded to determine whether a downlink allocation is contained in the current subframe. If there is no downlink allocation, receiving the remaining OFDM symbols will require power expenditure without appreciable benefit.

To save power when there is no downlink allocation, it is beneficial to switch off the radio frequency ("RF") frontend as soon as possible for the remaining portion of a subframe. In particular, OFDM symbols after the PDCCH region do not need to be received when there is no downlink allocation.

There are two known solutions to address this issue. The first has been to use a method referred to here for convenience as Micro Sleep based on PDCCH Decoding. Under Micro Sleep based on PDCCH Decoding, the PDCCH is received and decoded, and once the PDCCH decoding result is available, and the user equipment ("UE") can confirm that no downlink allocation is present, the RF frontend is switched off. This can often be achieved after approximately 8 OFDM symbols.

The second known solution has been to use a method that will be referred to here for convenience as Micro Sleep without PDCCH Decoding. Under Micro Sleep without PDCCH Decoding, the RF frontend is switched off after the maximum number of OFDM symbols containing PDCCH have been received. If a downlink allocation is detected, then Micro Sleep without PDCCH Decoding is discontinued, and the device is then configured to rely on the Hybrid Automatic Repeat Request ("HARQ") retransmission to receive the downlink allocation in the subsequent subframes.

One limitation of Micro Sleep without PDCCH Decoding is that the maximum number of OFDM symbols that can carry PDCCH must always be received. For most situations, this requires that the UE receives the first three OFDM symbols of each subframe before being switched off. US 2015 / 365930 describes an apparatus, system, and method for reliable decoding of control information during LTE wireless transmissions.

### Summary

In one aspect, a method for controlling a radio frequency frontend as defined in claim 1 is provided. In another aspect, an apparatus for controlling a radio frequency frontend as defined in claim 12 is provided. In another aspect, a machine-readable storage as defined in claim 13 is provided.

This may result in a benefit over prior methods that rely on decoding the received OFDM symbols before switching off the RF Frontend. A certain delay is created by decoding received OFDM symbols for a transmission grant. Where the RF Frontend is switched off only after ensuring the absence of a transmission grant, the resulting computational delay generally requires that multiple OFDM symbols are downloaded before the RF Frontend can be switched off. As such, the ability to switch off the RF Frontend based on a predicted CFI may permit earlier discontinuation of the RF Frontend and consequently increased stand-by time and substantial additional power savings.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Fig. 1 shows field measurements of actual CFI during an actual network deployment for a period of approximately 100 seconds.
Fig 2. shows the probability of certain CFI values based on the data depicted in Fig. 1
Fig. 3 shows a procedure for predicting CFI
Fig. 4 shows an application of predicted CFI
Fig. 5 shows anticipated power savings for RF frontend using CFI prediction compared to power usage with Micro Sleep without PDCCH Decoding or Micro Sleep based on PDCCH Decoding
Fig. 6 shows a method for controlling an RF Frontend.
Fig. 7 shows a method for controlling an RF Frontend.
Fig. 8 shows user equipment calculating a CFI and receiving corresponding OFDM symbols
Fig. 9 shows a method of controlling an RF Frontend.

### Description of Embodiments

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The words "plural" and "multiple" in the description and the claims expressly refer to a quantity greater than one. Accordingly, any phrases explicitly invoking the aforementioned words (e.g. "a plurality of [objects]", "multiple [objects]") referring to a quantity of objects expressly refers more than one of the said objects. The terms "group (of)", "set [of]", "collection (of)", "series (of)", "sequence (of)", "grouping (of)", etc., and the like in the description and in the claims, if any, refer to a quantity equal to or greater than one, i.e. one or more.

A "circuit" as user herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions which will be described below in further detail may also be understood as a "circuit". It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit.

As used herein, "memory" may be understood as a non-transitory computer-readable medium in which data or information can be stored for retrieval. References to "memory" included herein may thus be understood as referring to volatile or nonvolatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component comprising one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

The term "base station" used in reference to an access point of a mobile communication network may be understood as a macro base station, micro base station, Node B, evolved NodeBs (eNB), Home eNodeB, Remote Radio Head (RRH), relay point, etc. As used herein, a "cell" in the context of telecommunications may be understood as a sector served by a base station. Accordingly, a cell may be a set of geographically co-located antennas that correspond to a particular sectorization of a base station. Abase station may thus serve one or more cells (or sectors), where each cell is characterized by a distinct communication channel. Furthermore, the term "cell" may be utilized to refer to any of a macrocell, microcell, femtocell, picocell, etc.

The following detailed description refers to the accompanying drawings that show, by way of illustration, specific details and aspects of this Disclosure in which the invention may be practiced. Other aspects may be utilized and structural, logical, and electrical changes may be made without departing from the scope of the invention. The various aspects of this Disclosure are not necessarily mutually exclusive, as some aspects of this Disclosure can be combined with one or more other aspects of this Disclosure to form new aspects.

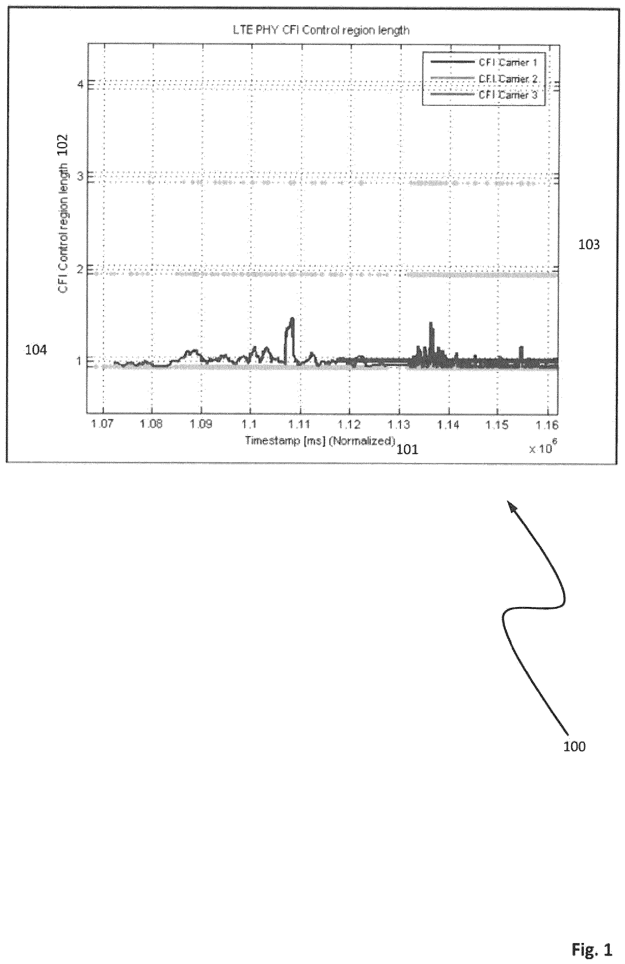

Fig. 1 shows field measurements of CFI for an actual network deployment 100 as sampled over a period of approximately 100,000 subframes or 100 seconds. Fig. 1 comprises an x-axis depicting the timestamp for the field measurements 101 and a y-axis showing the CFI control region length 102. The gray dots 103 represent the CFI values per subframe. The solid line 104 represents the moving average of CFI values over 100 subframes.

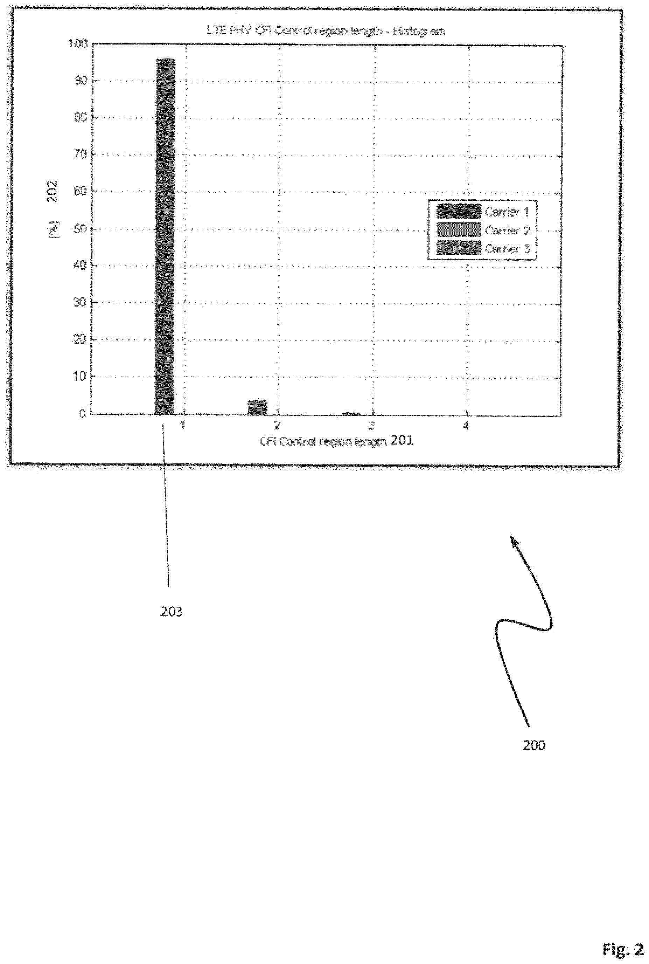

Fig. 2 shows the probability of certain CFI values used by a serving Evolved Node B ("eNodeB") 200, based on the field calculations depicted in Fig. 1. Fig. 2 comprises an x-axis depicting the CFI control region lengths tested 20 1, and it contains a y-axis depicting the percentage of subframes in which various CFI control region lengths were present 202 in the field testing shown in Fig. 1. According to the field calculations, the CFI was 1 in 95.0% of the samples, as shown in 203.

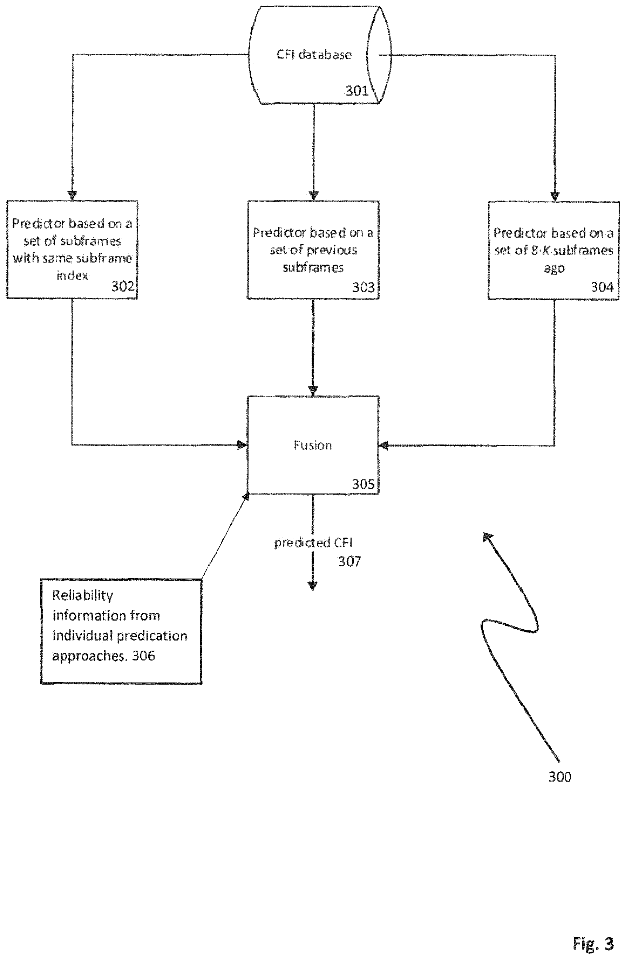

Fig. 3 shows a flowchart for CFI prediction 300. Fig. 3 comprises a CFI database 301 for past decoded CFI values. Future CFI values are then predicted from the CFI database 301 based on several possible methods. One method is to assess the CFI database 301 for a set of subframes with the same subframe index 302. A second method is to predict future CFI values based on a set of previous subframes 303. A third method is to predict future CFI based on a set of 8 times *K* previous subframes within the CFI database 304. The results from these methods may be used alone or combined into a fusion result 305. The fusion of multiple methods obtains a joint predicted CFI value based on the various predicted results 305. The future of multiple methods may also include the consideration of reliability information from the individual prediction approaches 306. The output is a predicted CFI 307.

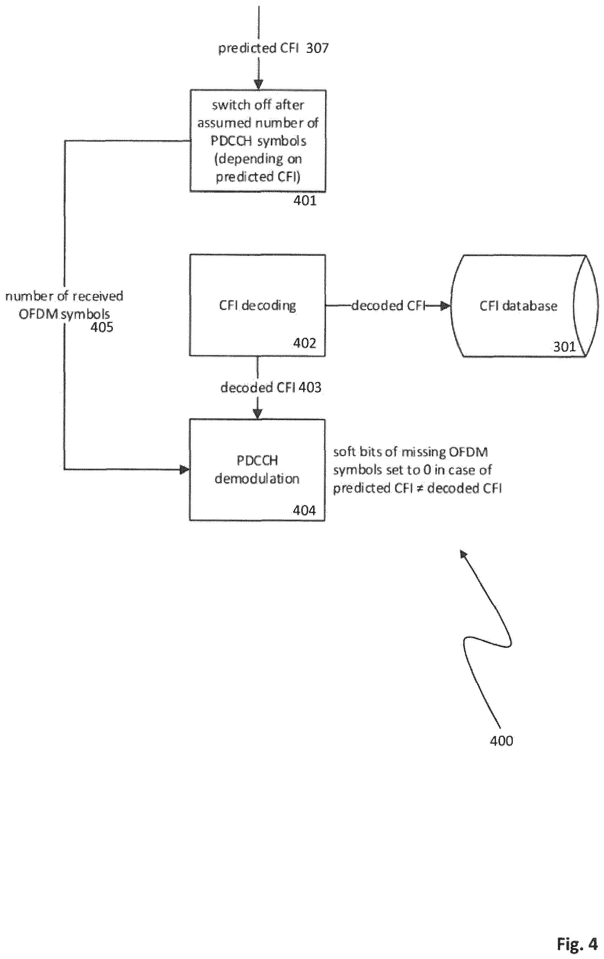

Fig. 4 shows a procedure for utilizing a predicted CFI 307 to improve power efficiency 400. The RF Frontend is switched off after the assumed number of PDCCH symbols given by the predicted CFI value 401. The CFI from the received transmission is decoded from the PCFICH 402, and the decoded CFI 403 is transferred to the CFI database 301 for storage and to PDCCH demodulation 404 for additional analysis. The number of OFDM symbols received in the transmission 405 are also transferred to PDCCH demodulation 404 for further analysis. While in PDCCH demodulation 404, the number of received OFDM symbols 405 and the decoded CFI 403 are used to set the soft bits of any missing OFDM symbol(s) to zero, in the event that the predicted CFI 307 is smaller than the decoded CFI 403.

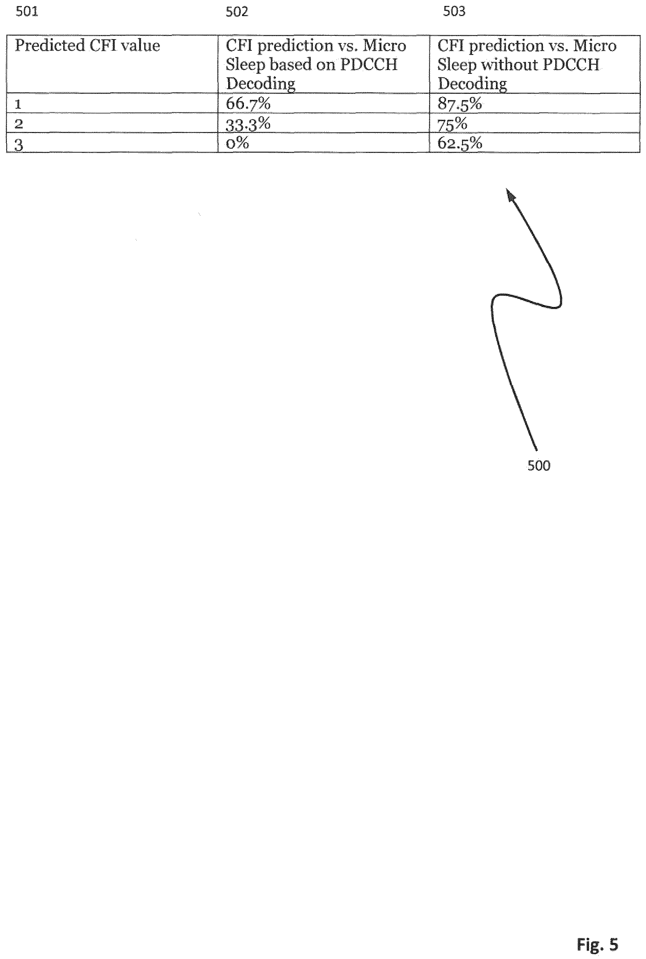

Fig. 5 is a table that demonstrates anticipated power savings of the RF Frontend using CFI prediction 500, compared to known methods of power savings. The first column shows a predicted CFI value 501. The second column shows the anticipated power savings of the RF Frontend using a predicted CFI value compared to a corresponding Micro Sleep without PDCCH Decoding application 502. The third column shows the anticipated power savings of the RF Frontend using a predicted CFI value compared to a corresponding Micro Sleep based on PDCCH Decoding application 503, wherein the Micro Sleep based on PDCCH Decoding typically requires eight OFDM symbols before the RF Frontend can be switched off.

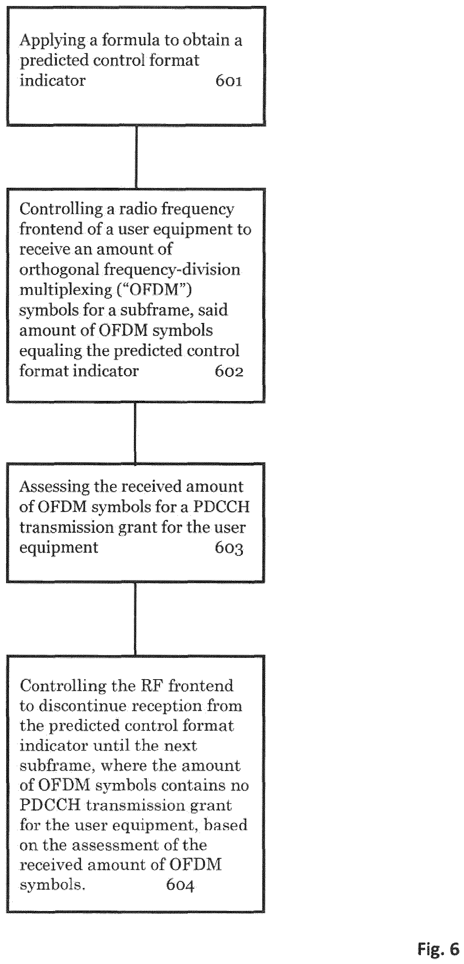

Fig. 6 shows a method for reducing power consumption in user equipment, said method comprising predicting a Control Format Indicator 601; controlling a radio frequency ("RF") frontend to receive a number of Orthogonal Frequency Division Multiplexing ("OFDM") symbols based on the predicted CFI 602; determining whether to grant a transmission based on the number of OFDM symbols received 603; and controlling the RF frontend to terminate reception of the number of OFDM symbols for a predefined period of time if the number of OFDM symbols in the predefined period of time comprises no transmission grant 604.

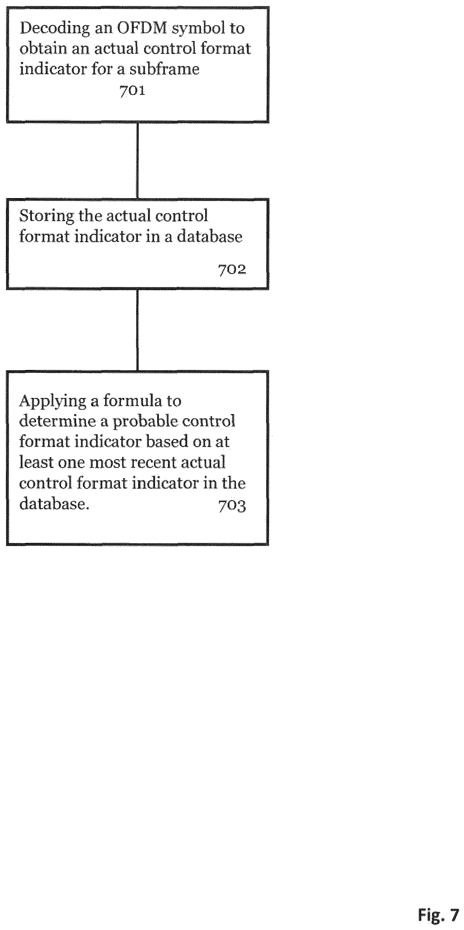

Fig. 7 shows a method for predicting a control format indicator comprising decoding an OFDM symbol to obtain an actual control format indicator for a subframe 70 1; storing the actual control format indicator in a database 702; and applying a formula to determine a probable control format indicator based on at least one most recent actual control format indicator in the database 703.

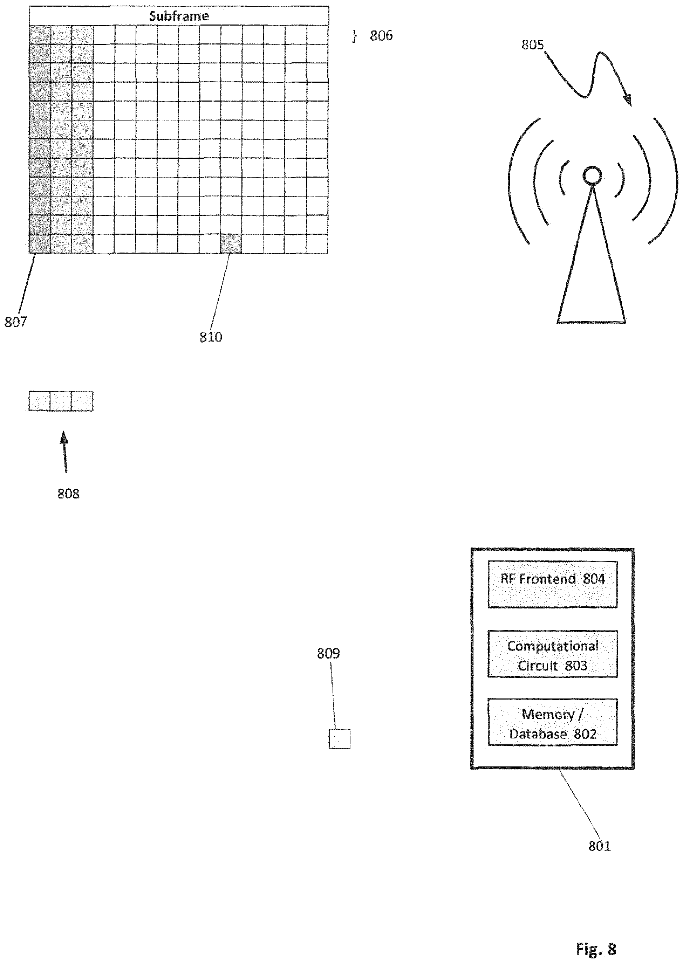

Fig. 8 shows a transmission of OFDM symbol data to UE. In this case, UE 801 comprises a memory or database 802, a computational circuit 803, and a radiofrequency frontend 804, and the UE is configured to receive transmissions from a network 805. The transmissions comprise OFDM symbols which are organized in groups of fourteen to create a subframe 806. In each subframe for a bandwidth greater than 1.4 MHz, the first OFDM symbol comprises CFI 807. The CFI 807 corresponds to the number of OFDM symbols that will be used to transmit PDCCH data 808. In this case, the CFI is three, which corresponds to the three OFDM symbols that comprise the PDCCH 808. The computational circuit 802 assesses prior CFIs stored in the database 801 and uses a formula to create a predicted CFI 809. The radiofrequency frontend receives transmissions of the number of OFDM symbols that correspond to the predicted CFI 809. These OFDM symbols are decoded and their PDCCH is assessed for a transmission grant 8 10 in the subframe's remaining OFDM symbols. In the depicted example, the PDCCH includes a scheduled transmission 810 later in the subframe. Where the PDCCH 808 in the OFDM symbols contains no transmission grant for the user equipment 801, the radiofrequency frontend 804 switches off for the reminder of the subframe.

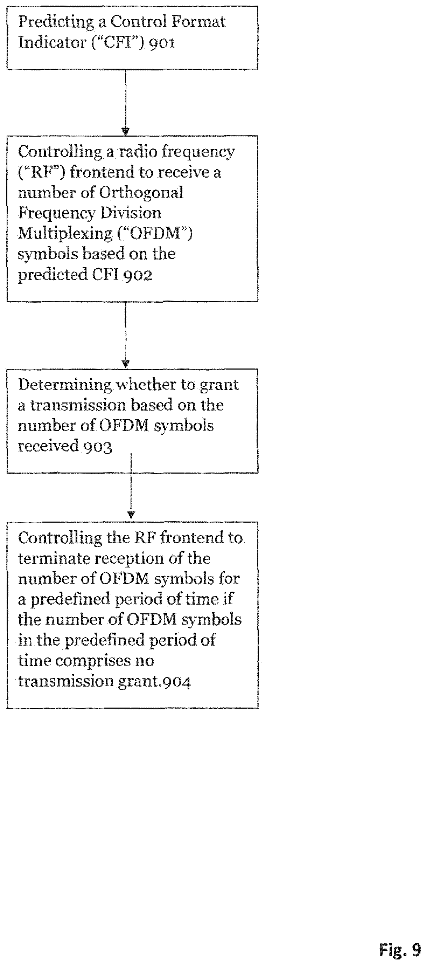

Fig. 9 shows a method for controlling an RF Frontend comprising predicting a Control Format Indicator ("CFI") 901; controlling a radio frequency ("RF") frontend to receive a number of Orthogonal Frequency Division Multiplexing ("OFDM") symbols based on the predicted CFI 902;
determining whether to grant a transmission based on the number of OFDM symbols received 903; and controlling the RF frontend to terminate reception of the number of OFDM symbols for a predefined period of time if the number of OFDM symbols in the predefined period of time comprises no transmission grant.904.

### A. CFI Prediction to Improve Power Efficiency

There is great utility in improving power consumption of UE. Power savings in a battery powered device is of tremendous importance for user satisfaction. To save power in an LTE downlink receiver, the RF Frontend, which requires the highest power consumption, should be switched on only when required. Very often, the LTE downlink receiver has good signal reception conditions, is connected to the base station, and has a low probability of downlink allocations. In such situations, the proposed CFI prediction-based algorithm significantly reduces power consumption.

Reduced power consumption is generally desirable and can lead to many advantages, including increased battery longevity and increased user satisfaction. One particularly advantageous tool in increasing power efficiency is the ability to turn off the RF Frontend for portions of a transmission subframe. It is generally desirable to switch off the RF Frontend as soon as possible after receiving the PDCCH. The PDCCH in LTE comprises UE-specific scheduling assignments regarding the allocation for downlink resource allocation, uplink grants, and other signaling messages. Thus, once the PDCCH has been received, and as long as the PDCCH contains no downlink allocations for the UE, the UE may save power by switching off the RF Frontend for the remainder of the subframe.

Prior efforts at decreasing power consumption generally permitted the RF Frontend to receive some portions of a subframe, but then turn off the RF Frontend for other portions of a subframe. Efforts to increase power efficiency by turning off the RF Frontend during portions of the subframe may first receive and decode the PDCCH, and potentially switch off the RF Frontend for the remainder of the subframe.

Additional power efficiency may be achieved by predicting the CFI, which may permit the RF Frontend to be switched off immediately after receiving the OFDM symbol containing PDCCH. The PDCCH is transmitted at the beginning of a subframe. In a 1.4 MHz channel, the PDCCH is transmitted in the first two to four OFDM symbols of the subframe. In all other bandwidths, and in the regular usage on an LTE network, the PDCCH is transmitted on the first one to three OFDM symbols of the subframe. The specific number of OFDM symbols that will be transmitted on any given subframe is contained in the CFI. This number is set by the network, and it may change periodically to accommodate a variety of variables in the network transmission.

The CFI is transmitted in the first OFDM symbol of each subframe. Thus, a UE receives and decodes the PDCCH, which is typically contained in the first one to three OFDM symbols (except in a 1.4 MHz channel), to determine whether the remaining OFDM symbols of that subframe will contain a scheduling assignment, such as a transmission grant, for the specific UE. Where the PDCCH contains no scheduling assignment for a specific UE, that UE can generally switch off its RF Frontend for the remainder of the subframe without negative consequence. This can result in substantial efficiency gains, since the RF Frontend is freed from receiving the remainder of the subframe, and since, consequently, stand-by time is increased.

Prior efforts at increasing efficiency by switching off the RF Frontend have required that the RF Frontend receive the first three OFDM symbols, since the PDCCH may normally be transmitted in up to the first three OFDM symbols in channels other than 1.4 MHz. Nevertheless, the PDCCH may not be transmitted in all three OFDM symbols, and where the PDCCH is transmitted in fewer than three OFDM symbols, there is a built-in inefficiency in this system. Under these circumstances, it may be desirable to reduce the number of OFDM symbols received accordingly.

Early efforts at addressing this issue attempted to decode the first OFDM symbol in a subset to obtain the CFI value, which would then provide the number of OFDM symbols on which the PDCCH would be projected. However, this process of decoding in real time has not been able to be performed with sufficient rapidity to provide efficiency over the Micro Sleep without PDCCH Decoding method, wherein the first three PDCCH symbols are always received. In light of this, it becomes advantageous to predict the CFI for an upcoming PDCCH and turn off the RF Frontend after receiving the number of OFDM symbols that corresponds to the predicted CFI.

CFI can be predicted based on the history of the past CFI decoding results. A predicted CFI can allow the RF Frontend to terminate reception after receiving the number of OFDM symbols that corresponds to the predicted CFI. In circumstances where the CFI is less than three, this may permit an earlier switching off of the RF Frontend, and thereby a savings of power.

### B. Behavior of CFI, generally

The tendency of CFI to generally remain constant and to change in small increments makes CFI prediction viable and attractive method for this application. As shown in Fig. 2, in one field measurement of CFI over a period of roughly 100,000 subframes, the CFI value was 1 during 95.9% of the subframes. Although the CFI value may change, it tends to remain relatively constant, and the likelihood of a CFI value changing from one given subframe to the next is small.

Moreover, where the CFI changes, it is unlikely to change by more than an increment of 1. Fig. 2 similarly shows that where the CIF changes, it typically changes only by an increment of 1. Large changes of CFI, i.e. changes of more than 1, are uncommon. This further supports CFI predictions, since a sudden increase in CFI is likely to result in, at most, the loss of one OFDM symbol of PDCCH data.

### C. CFI Prediction

According to one aspect of the Disclosure, the actual CFI is received and decoded for each subframe, and the corresponding CFI value is saved in a database of past decoded CFI values. The number of stored CFI values can be adjusted to suit the needs of the application.

According to one aspect of the Disclosure, the number of stored CFI values may be 40. As such, the UE will store the CFI values for the last 40 subframes. These stored values will be used as data to predict the next CFI value.

According to another aspect of the Disclosure, CFI prediction occurs through evaluation of CFI values from subframes in the previous radio frames with the same subframe index. The CFI describes the number of OFDM symbols required for scheduling transmissions by using PDCCH transmissions. Certain subframes are more likely or less likely to be used for scheduling transmissions. For example, special subframes in time division duplex mode can support less user traffic than other subframes. Similarly, subframes with synchronization signals and the Physical Broadcast Channel support less user traffic than other subframes. However, in some subframes, the network is always scheduling transmission of system information blocks, thus causing a permanent usage of PDCCH resources in these subframes. From these examples, prediction may make use of CFI from past subframes with the same subframe index.

According to a second aspect of the Disclosure related to CFI prediction, CFI prediction occurs through evaluation of a set of previous subframes. Network traffic often corresponds to burst transmissions, such as when certain users perform file transfer protocol upload / download or web browsing. Therefore, scheduling requirements can change over short periods of time. This justifies using a predictor based on CFI from previous subframes.

According to a third aspect of the Disclosure related to CFI prediction, CFI prediction occurs through prediction based on CFI from a set of 8 times K subframes ago. Hybrid automatic repeat request retransmissions in the downlink are often scheduled by the network with the shortest possible round-trip time of eight subframes. If no retransmissions are required, the network often schedules transmissions in uplink and downlink in a subframe that is 8 subframes after the subframe with the previous transmission. Therefore, a CFI predictor could make use of the periodicity of scheduling transmissions that are 8 subframes apart, for instance, a CFI predictor could make use of decoded CFI from a set of 8 times K previous subframes, whereby K is a number from the set {1, 2, .., K_{MAX}}, and K_{MAX} is a small integer value. Typically, the largest K_{MAX} value will be 4.

Although the input samples are different in the above three prediction methods, the prediction algorithm itself works similarly for each of them. The prediction algorithm makes use of the decoded CFI results to obtain the predicted CFI result. Some examples for the possible prediction algorithms include: (1) filtering decoded CFI results with a finite impulse response ("FIR") filter, whereby more recent results typically correspond to larger coefficients; (2) taking the mean of the decided CFI results; (3) taking the mean of the decided CFI results and applying an offset as a safety margin; (4) taking the median of the decoded CFI results; (5) taking the median of the decoded CFI results and applying an offset as a safety margin; and (5) taking the maximum of the decoded CFI results. This list of prediction algorithms is non-exhaustive and may be adapted or expanded to satisfy the needs of a given CFI prediction implementation.

According to another aspect of the Disclosure, the algorithm results can be combined to arrive at a predicted CFI. In this aspect, a fusion method is used to obtain a joint CFI prediction from the results of the individual CFI prediction approaches mentioned in the previous Section. The fusion method may comprise a combining stage and a quantization stage of the result as an integer value used as the final predicted CFI value. Because the individual CFI prediction approaches do not necessarily result in integer values, the fusion result must be adjusted to an integer, since the CFI is generally either 1, 2, or 3. The adjustment to integer values can be achieved by rounding or any other suitable means.

Because the above methods for calculating a predicted CFI may yield different results, they may be combined to obtain a combined predicted CFI. The combined predicted CFI may be obtained by: 1 weighted metric combining, whereby the weights can be based on reliability information; (2) selection combining, whereby the selection can be made based on reliability information; (3) a combination of weighted metric combining and selection combining; and/or (4) taking the maximum of the decoded CFI results. This is a non-exhaustive list of means to combine various predicted CFI results to obtain a combined predicted CFI. This list may be adapted or expanded to meet the needs of a given CFI prediction implementation.

Taking the maximum of the decoded CFI results is the most conservative of these options. Although this method has the smallest probability of failing to receive a grant for the UE in PDCCH, this method also has the smallest power savings, since it requires receiving a larger number of OFDM symbols.

Where the predicted CFI permits the RF Frontend to be turned off earlier than the Micro Sleep without PDCCH Decoding model, significant power savings can be realized. Unless the RF Frontend is operating in a channel at 1.4 MHz, the CFI will be 1, 2, or 3. Where the predicted CFI is 1, the RF Frontend will be turned on for the first OFDM symbol and, assuming no grant for the UE, it will be turned off for the remaining OFDM symbols in its subframe. In comparison to Micro Sleep without PDCCH Decoding, which would require that the RF Frontend remain on for three OFDM symbols, this realizes a 66.7% power savings in the RF Frontend. Where the predicted CFI is 2, the RF Frontend will be turned on for the first two OFDM symbols and, assuming no grant for the UE, it will be turned off for the remaining OFDM symbols in its subframe. In comparison to Micro Sleep without PDCCH Decoding, which would require that the RF Frontend remains on for three OFDM symbols, this realizes a 33.3% power savings in the RF Frontend. Where the predicted CFI is 3, there is no power savings with respect to the RF Frontend, compared to the Micro Sleep without PDCCH Decoding model.

For each subframe, both a predicted CFI will be set, and an actual CFI will be received. As stated above, the predicted CFI will determine how many OFDM symbols will be received to obtain PDCCH. Each subframe's actual CFI will also be obtained. Because the actual CFI is contained in the first OFDM symbol, it will be received regardless of the predicted CFI setting. Once received, the actual CFI will be decoded and stored in the CFI data for use in future CFI predictions.

According to an additional aspect of the Disclosure, the actual CFI for each subframe will be compared to the predicted CFI.

Where it is determined after decoding the actual CFI that the predicted CFI is smaller than the actual CFI, the RF Frontend will have typically been turned off for one OFDM symbol containing PDCCH. Because, as described above, CFI tends to change infrequently and in small increments, the likelihood is that only one OFDM symbol containing PDCCH will have been missed. Where this occurs, the missing soft bits for PDCCH decoding (missing PDCCH data) are set to value 0. The UE then relies on coding gain to successfully decode PDCCH from the PDCCH data received. In some circumstances, this will permit recovery of most or all of the PDCCH data. In the case of PDCCH decoding failure, it is likely that only an allocation of one subframe will have been missed.

In the event that one or more OFDM symbols are missed, and where the data cannot be obtained through decoding gain, the UE can utilize Hybrid Automatic Repeat Request to request retransmission of missing data. This may require sending of ACK or NACK signals to obtain a retransmission.

In the event that an actual CFI is higher than a predicted CFI, and depending on configuration, the efforts at predicting may temporarily cease while the missed OFDM symbols are recovered. Where the efforts at predicting CFI are temporarily ceased the RF Frontend will not be switched off early for power saving purposes as set forth in this Disclosure, so as to permit recovery of the missing OFDM symbols. The actual CFI may still be decoded and stored in a database for use in predicting CFI once the prediction resumes.

According to one aspect of the Disclosure, the RF Frontend will only be switched off according to this method where the OFDM symbol(s) is/are assessed to contain no PDCCH transmission grant. Where the predicted CFI is less than the actual CFI, and where attempts at obtaining the missing PDCCH through decoding gain are unsuccessful, it cannot be immediately determined whether a transmissions grant has been issued. Under this circumstance, and according to this embodiment, the RF Frontend will be configured not to execute this power saving method, but rather to remain on.

According to another aspect of the Disclosure, the RF Frontend may be switched off where the UE has received less than all of the PDCCH data and has requested retransmission. Under this situation, the network may provide a retransmission response, but said response will not be immediate. The UE may alternatively be configured to turn off the RF Frontend during the period between the retransmission request and the time that a retransmission would be anticipated.

In Example 1, a method for controlling a radio frequency frontend is disclosed, the method comprising:
predicting a Control Format Indicator ("CFI");
controlling a radio frequency ("RF") frontend to receive a number of Orthogonal Frequency Division Multiplexing ("OFDM") symbols based on the predicted CFI;
determining whether to grant a transmission based on the number of OFDM symbols received; and
controlling the RF frontend to terminate reception of the number of OFDM symbols for a predefined period of time if the number of OFDM symbols in the predefined period of time comprises no transmission grant.

In Example 2, a method for improving performance in user equipment is disclosed, said method comprising:
applying a formula to obtain a predicted control format indicator;
controlling a radio frequency ("RF") frontend of a user equipment to receive an amount of Orthogonal Frequency Division Multiplexing ("OFDM") symbols for a subframe, said amount of OFDM symbols equaling the predicted control format indicator;
assessing the received amount of OFDM symbols for a Physical Downlink Control Channel ("PDCCH") transmission grant for the user equipment; and
controlling the RF frontend to discontinue reception from the predicted control format indicator until the next subframe, where the amount of OFDM symbols comprises no PDCCH transmission grant for the user equipment, based on the assessment of the received amount of OFDM symbols.

In Example 3, a method for predicting a control format indicator is disclosed, said method comprising:
a. decoding an OFDM symbol to obtain an actual control format indicator for a subframe;
b. storing the actual control format indicator in a database; and
c. applying a formula to determine a probable control format indicator based on at least one most recent actual control format indicator in the database.

In Example 4, the method of Example 1, 2 or 3, wherein a user equipment predicts the CFI.

In Example 5, the method of Example 1, 2 or 3, wherein a terminal mobile communications device predicts the CFI.

In Example 6, the method of Example 1, 2 or 3, wherein the OFDM symbols comprise Physical Downlink Control Channel data.

In Example 7, the method of Example 1, 2 or 3, wherein the predefined period of time is until the end of the current subframe.

In Example 8, the method of Example 1, 2 or 3, wherein the predefined period of time is until the beginning of the next subframe.

In Example 9, the method of Example 1, 2 or 3, wherein a bandwidth is 1.4 megahertz, and the CFI ranges from 2 to 4.

In Example 10, the method of Example 1, 2 or 3, wherein a bandwidth is greater than 1.4 megahertz, and the CFI ranges from 1 to 3.

In Example 11, the method of Example 1, 2 or 3, wherein the CFI value changes in response to poor signal conditions.

In Example 12, the method of Example 1, 2 or 3, wherein the CFI value changes in response to overload.

In Example 13, the method of any one of Examples 1, 11, or 12, wherein a change in CFI is unlikely to be greater than an increase or a decrease by 1.

In Example 14, the method of Example 1, 2 or 3, wherein predicting CFI offers an overall power savings advantage over the method described as Micro Sleep based on PDCCH Decoding.

In Example 15, the method of Example 1, 2, 3 or 14, wherein Micro Sleep based on PDCCH Decoding requires receiving approximately 8 OFDM symbols, and predicting CFI requires receiving no more than 3 symbols in a bandwidth greater than 1.4 megahertz.

In Example 16, the method of Example 1, 2 or 3, wherein predicting CFI provides an overall power savings advantage over the method described as Micro Sleep without PDCCH Decoding.

In Example 17, the method of Example 1, 2, 3 or 16, wherein a predicted CFI value of 1 represents a 66.7% power savings over the Micro Sleep without PDCCH Decoding method.

In Example 18, the method of Example 1, 2, 3 or 16, wherein a predicted CFI value of 2 represents a 33.3% power savings over the Micro Sleep without PDCCH Decoding method.

In Example 19, the method of Example 1, 2, 3 or 16, wherein a predicted CFI value of 3 represents a 0% power savings over the Micro Sleep without PDCCH Decoding method.

In Example 20, the method of Example 1, 2, 3 or 14, wherein a predicted CFI value of 1 represents an 87.5% power savings over the Micro Sleep based on PDCCH Decoding method.

In Example 21, the method of Example 1, 2, 3 or 14, wherein a predicted CFI value of 2 represents a 75% power savings over the Micro Sleep based on PDCCH Decoding method.

In Example 22, the method of Example 1, 2, 3 or 14, wherein a predicted CFI value of 3 represents a 62.5% power savings over the Micro Sleep based on PDCCH Decoding method.

In Example 23, the method any one of Examples 1, 2, 4 or 14-22 is disclosed, wherein the resulting power savings results in increased user satisfaction.

In Example 24, the method of Example 1, 2, or 3, wherein the RF Frontend is only switched off where no received OFDM symbol corresponding to a predicted CFI contains a PDCCH transmission grant.

In Example 25, the method of Example 1, 2, 3 or 24, wherein the switching off of the RF Frontend results in improved performance of the user equipment.

In Example 26, the method of Example 1, 2, or 3, wherein the predicted CFI is computed for each subframe.

In Example 27, the method of Example 1, 2,3 or 26, wherein the CFI is predicted by assessing CFIs from previous subframes.

In Example 28, the method of Example 1, 2, 3 or 27, wherein the number of previous subframes is 40.

In Example 29, the method of Example 1, 2, 3 or 27, wherein the number of previous subframes is 10.

In Example 30, the method of Example 1, 2, 3 or 27, wherein the number of previous subframes is greater than 40.

In Example 31, the method of Example 1, 2, 3 or 27, wherein the number of previous subframes is fewer than 40.

In Example 32, the method of Example 1, 2, 3 or 27, wherein the CFI is predicted by determining a predicted CFI based on CFIs from previous subframes with an identical subframe index.

In Example 33, the method of Example 1, 2, 3 or 27, wherein the CFI is predicted by assessing CFIs from a set of 8 · *K* previous subframes.

In Example 34, the method of Example 33, wherein *K* is a member of a set of integers 1 through 4.

In Example 35, the method of Example 1, 2, 3 or 27, wherein the CFI is predicted by filtering decoded CFIs with a finite impulse response filter.

In Example 36, the method of Example 1, 2, 3 or 27, wherein the CFI is predicted by taking the mean of a set of decoded CFI results.

In Example 37, the method of Example 1, 2, 3 or 27, wherein the CFI is predicted by taking the median of a set of decoded CFI results.

In Example 38, the method of Example 1, 2, 3 or 27, wherein the CFI is predicted by taking the maximum of a set of decoded CFI results.

In Example 39, the method of any one of Examples 27 to 38, further comprising applying an offset value to the predicted CFI.

In Example 40, the method of Example 39, wherein the offset value is a safety margin.

In Example 41, the method of Example 39 or 40, wherein the offset value reduces the likelihood of the predicted CFI being smaller than the actual CFI.

In Example 42, the method of Example 1, 2, 3 or 27, wherein the predicted CFI is obtained by:
assessing CFIs from previous subframes with an identical subframe index;
assessing CFIs from recent subframes; or
assessing a set consisting of the CFIs of the most recent 8 · K subframes, wherein K is an integer ranging from 1 to 4.

In Example 43, the method of any one of Examples 1, 2, 3, 27 to 42, further comprising the predicted CFI being:
the mean of a set of decoded Control Format Indicator results;
the median of a set of decoded Control Format Indicator results; or
the maximum of a set of decoded Control Format Indicator results.

In Example 44, the method of any one of Example 1, 2, 3 or 27 to 42, wherein at least two methods for calculating the predicted CFI are performed.

In Example 45, the method of Example 44, wherein a first method is used to obtain a first predicted CFI, and a method is used to obtain a second CFI.

In Example 46, the method of Examples 44 or 45, wherein the CFI is predicted by taking the mean of the results from the at least two methods for calculating the predicted CFI.

In Example 47, the method of Examples 44 or 45, wherein the CFI is predicted by taking the median the results from the at least two methods for calculating the predicted CFI.

In Example 48, the method of Example 44 or 45, wherein the CFI is predicted by taking the maximum of the results from the at least two methods for calculating the predicted CFI.

In Example 49, the method of any one of Examples 44 to 48, wherein the CFI is predicted by a combining stage and a quantization stage of the results from at least two methods for calculating the predicted CFI.

In Example 50, the method of any one of Examples 44 to 48, wherein the CFI is predicted by weighted metric combining, whereby the weights can be based on reliability information.

In Example 51, the method of any one of Examples 44 to 50, wherein the CFI is predicted by selection combining, whereby the selection can be performed based on reliability information.

In Example 52, the method of Example 1, 2, 3, 50, or 51, wherein the CFI is predicted by a combination of weighted metric combining and selection combining.

In Example 53, the method of any one of Examples 44 to 52, further comprising combining at least two predicted CFIs and then applying an offset.

In Example 54, the method of Example 53, wherein the offset is a safety margin to reduce the likelihood of a predicted CFI being smaller than the actual CFI.

In Example 55, the method of any of Examples 1, 2, 3, or 26 to 49, further comprising the predicted CFI being converted to an integer.

In Example 56, the method of Example 1, 2, or 3, further comprising decoding a received PCFICH.

In Example 57, the method of Example 56, further comprising assessing the decoded PCFICH for a transmission grant.

In Example 58, the method of Example 1, 2, or 3, further comprising decoding the number of OFDM symbols to obtain an actual CFI.

In Example 59, the method of Example 58, further comprising storing the actual CFI in a memory.

In Example 60, the method of Example 1, 2, 3 or 59, further comprising storing the actual CFI in a database.

In Example 61, the method of any of Examples 1, 2, 3 or 58 to 60, further comprising comparing the predicted CFI to an actual CFI.

In Example 62, the method of Example 61, wherein the predicted CFI is smaller than the actual CFI, recovering the missing data through coding gain.

In Example 63, the method of Example 62, further comprising recovering the missing data through coding gain.

In Example 64, the method of Example 63, further comprising setting missing data to a constant.

In Example 65, the method of Example 63, wherein the missing soft bits are set to zero.

In Example 66, the method of Example 62, wherein the predicted CFI is less than the actual CFI, and Automatic Repeat Request is used to obtain a retransmission of missing data.

In Example 67, the method of Example 66, wherein the missing data is Physical Downlink Shared Channel Data.

In Example 68, the method of Example 62, further comprising ceasing CFI prediction because the actual CFI value is larger than the predicted CFI value.

In Example 69, the method of Example 1, 2, or 3, further comprising ceasing CFI prediction because a transmission grant is expected.

In Example 70, the method of Example 1, 2, or 3, wherein the CFI cannot be predicted due to poor signal strength.

In Example 71, the method of Example 62, wherein a transmission grant is not received.

In Example 72, the method of Example 71, wherein the missing data cannot be recovered through coding gain, and a new transmission grant is transmitted.

In Example 73, the method of Example 72, wherein the Evolved Node B transmits the transmission grant.

In Example 74, an apparatus for controlling a radio frequency frontend, said apparatus comprising:
an RF Frontend, configured to receive transmissions from a wireless network;
a memory configured to store a CFI;
a computational circuit, configured to predict a second CFI from at least one entry in the memory and switch off the RF Frontend after the RF Frontend receives a number of OFDM symbols, wherein the number of OFDM symbols received equals the predicted CFI.

In Example 75, an apparatus for controlling a radio frequency frontend, said apparatus comprising:
a radio frequency ("RF") frontend, configured to receive transmissions from a wireless network;
a computational circuit, configured to predict a CFI;
and a memory, wherein a set of previous CFIs are stored;
further comprising the computational circuit being configured to obtain a predicted CFI;
the RF frontend being configured to receive an amount of Orthogonal Frequency Division Multiplexing ("OFDM") symbols in accordance with the predicted CFI;
the computation circuit being configured to assess the received amount of OFDM symbols for a transmission grant; and
the radio frequency frontend being configured to discontinue reception from the predicted CFI until a predefined period of time, where the amount of OFDM symbols contains no transmission grant.

In Example 76, the apparatus of Examples 74 or 75, further comprising the computational circuit being configured to employ at least two methods to predict a CFI.

In Example 77, a Machine-readable storage including machine-readable instructions is disclosed that, when executed, implements a method or realize an apparatus as claimed in any preceding Example.

In Example 78, a non-transient computer readable medium is disclosed, containing program instructions for causing a computer to perform the method of:
predicting a Control Format Indicator ("CFI");
controlling a radio frequency ("RF") frontend to receive a number of Orthogonal Frequency Division Multiplexing ("OFDM") symbols in accordance with the predicted CFI;
assessing the received number of OFDM symbols for a transmission grant; and
controlling the RF frontend to discontinue reception for a predefined period of time, where the number of OFDM symbols in a predefined time interval contains no transmission grant, based on the assessment of the received number of OFDM symbols.

In Example 79, a means for controlling a radio frequency frontend is disclosed, wherein said means:
predicts a Control Format Indicator ("CFI");
controls a radio frequency ("RF") frontend to receive an amount of Orthogonal Frequency Division Multiplexing ("OFDM") symbols, said amount of OFDM symbols equaling the predicted CFI;
assesses the received amount of OFDM symbols for a transmission grant; and
controls the RF frontend to discontinue reception where the received amount of OFDM symbols contains no transmission grant.

## Claims

1. A method for controlling a radio frequency frontend comprising:
predicting (601) a Control Format Indicator, CFI;
controlling (602) the radio frequency, RF, frontend to receive a number of Orthogonal Frequency Division Multiplexing , OFDM, symbols based on the predicted CFI;
determining (603) whether to grant a transmission based on the number of OFDM symbols received; and
controlling (604) the RF frontend to terminate reception of the number of OFDM symbols for a predefined period of time if the number of OFDM symbols in the predefined period of time comprises no transmission grant:
wherein the predicted CFI is obtained by:
assessing CFIs from previous subframes with an identical subframe index;
assessing CFIs from recent subframes; or
assessing a set consisting of the CFIs of the most recent 8 · *K* subframes, wherein *K* is an integer ranging from 1 to 4.

2. The method of Claim 1, wherein predicting (601) the CFI comprises obtaining a set of decoded CFI results based on the assessing the CFIs from the previous, the recent or the most recent 8 · *K* subframes, the predicted CFI being:
the mean of the set of decoded CFI results;
the median of the set of decoded CFI results; or
the maximum of the set of decoded CFI results.

3. The method of any one of Claim 1 or 2, wherein at least two methods for calculating the predicted CFI are performed.

4. The method of Claim 3, wherein the CFI is predicted by taking the mean of the results from the at least two methods for calculating the predicted CFI.

5. The method of Claim 3, wherein the CFI is predicted by taking the median the results from the at least two methods for calculating the predicted CFI.

6. The method of any one of Claims 1 to 5, further comprising decoding the number of OFDM symbols to obtain an actual CFI.

7. The method of Claim 6, further comprising storing the actual CFI in a memory.

8. The method of Claim 7, further comprising comparing the predicted CFI to the actual CFI.

9. The method of Claim 8, further comprising the predicted CFI being smaller than the actual CFI, and recovering the missing data through coding gain.

10. The method of Claim 8, further comprising the predicted CFI being smaller than the actual CFI, and obtaining a retransmission of missing data using Automatic Repeat Request.

11. The method of any one of Claims 1 to 8, further comprising adding an offset value to the predicted CFI, to reduce the likelihood of a predicted CFI being smaller than the actual CFI.

12. An apparatus for controlling a radio frequency frontend (804), said apparatus comprising:
a radio frequency, RF, frontend (804), configured to receive transmissions from a wireless network;
a computational circuit (803), configured to predict a CFI;
and a memory (802), wherein a set of previous CFIs are stored;
further comprising the computational circuit (803) being configured to obtain a predicted CFI;
the RF frontend (804) being configured to receive an amount of Orthogonal Frequency Division Multiplexing, OFDM, symbols in accordance with the predicted CFI;
the computation circuit (803) being configured to assess the received amount of OFDM symbols for a transmission grant; and
the RF frontend (804) being configured to discontinue reception from the predicted CFI until a predefined period of time, where the amount of OFDM symbols contains no transmission grant;
wherein the computational circuit (804) is configured to predict the CFI by:
assessing CFIs from previous subframes with an identical subframe index;
assessing CFIs from recent subframes; or
assessing a set consisting of the CFIs of the most recent 8 · *K* subframes, wherein *K* is an integer ranging from 1 to 4.

13. Machine-readable storage including machine-readable instructions, when executed, to implement a method or realize an apparatus as claimed in any preceding claim.

## Patentansprüche

1. Verfahren zur Steuerung einer Hochfrequenzeingangsstufe, umfassend:
Vorhersage (601) einer Steuerformatanzeige, CFI;
Steuerung (602) der Eingangsstufe für die Hochfrequenz, HF, zum Empfang einer Anzahl von "Orthogonal Frequency Division Multiplexing"-Symbolen, OFDM-Symbolen, auf Grundlage der vorhergesagten CFI;
Bestimmung (603), ob eine Übertragung auf Grundlage der Anzahl erhaltener OFDM-Symbole erlaubt werden soll; und
Steuerung (604) der HF-Eingangsstufe zum Beenden des Empfangs der Anzahl OFDM-Symbole für einen vorgegebenen Zeitraum, wenn die Anzahl der OFDM-Symbole in dem vorgegebenen Zeitraum keine Übertragungserlaubnis umfasst:
wobei die vorhergesagte CFI erhalten wird durch:
Bewertung von CFIs von vorherigen Subframes mit einem identischen Subframeindex;
Bewertung von CFIs von den kürzlichen Subframes; oder
Bewertung eines Satzes, der aus den CFIs der neuesten 8 · *K* Subframes besteht, wobei *K* eine ganze Zahl von 1 bis 4 ist.

2. Verfahren nach Anspruch 1, wobei die Vorhersage (601) der CFI das Erhalten eines Satzes decodierter CFI-Ergebnisse auf Grundlage der Bewertung der CFIs von den vorherigen, kürzlichen oder neuesten 8 · *K* Subframes umfasst und die vorhergesagte CFI ist:
der Mittelwert des Satzes decodierter CFI-Ergebnisse;
der Median des Satzes decodierter CFI-Ergebnisse; oder
das Maximum des Satzes decodierter CFI-Ergebnisse.

3. Verfahren nach einem der Ansprüche 1 oder 2, wobei mindestens zwei Verfahren für die Berechnung der vorhergesagten CFI durchgeführt werden.

4. Verfahren nach Anspruch 3, wobei die CFI vorhergesagt wird, indem der Mittelwert der Ergebnisse aus den mindestens zwei Verfahren für die Berechnung der vorhergesagten CFI verwendet wird.

5. Verfahren nach Anspruch 3, wobei die CFI vorhergesagt wird, indem der Median der Ergebnisse aus den mindestens zwei Verfahren für die Berechnung der vorhergesagten CFI verwendet wird.

6. Verfahren nach einem der Ansprüche 1 bis 5, ferner umfassend die Decodierung der Anzahl OFDM-Symbole, um eine tatsächliche CFI zu erhalten.

7. Verfahren nach Anspruch 6, ferner umfassend das Speichern der tatsächlichen CFI in einem Speicher.

8. Verfahren nach Anspruch 7, ferner umfassend den Vergleich der vorhergesagten CFI mit der tatsächlichen CFI.

9. Verfahren nach Anspruch 8, ferner umfassend, dass die vorhergesagte CFI kleiner ist als die tatsächliche CFI und die Wiederherstellung fehlender Daten durch Codegewinn.

10. Verfahren nach Anspruch 8, ferner umfassend, dass die vorhergesagte CFI kleiner ist als die tatsächliche CFI, und den Erhalt einer erneuten Übertragung fehlender Daten durch eine automatische Wiederholungsanfrage.

11. Verfahren nach einem der Ansprüche 1 bis 8, ferner umfassend das Hinzufügen eines Offsetwerts zu der vorhergesagten CFI, um die Wahrscheinlichkeit zu verringern, dass eine vorhergesagte CFI kleiner ist, als die tatsächliche CFI.

12. Vorrichtung zur Steuerung einer Hochfrequenzeingangsstufe (804), wobei die Vorrichtung umfasst:
eine Eingangsstufe für die Hochfrequenz, HF, (804), konfiguriert, um Übertragungen von einem Drahtlosnetz zu empfangen;
einen Berechnungsschaltkreis (803), konfiguriert, eine CFI vorherzusagen;
und einen Speicher (802), in dem ein Satz vorheriger CFIs gespeichert wird;
ferner umfassend die Konfiguration des Berechnungsschaltkreises (803) zum Abrufen einer vorhergesagten CFI;
wobei die HF-Eingangsstufe (804) konfiguriert ist, eine Anzahl von "Orthogonal Frequency Division Multiplexing"-Symbolen, OFDM-Symbolen, der vorhergesagten CFI entsprechend zu empfangen;
der Berechnungsschaltkreis (803) konfiguriert ist, um die empfangene Anzahl von OFDM-Symbolen für eine Übertragungserlaubnis zu bewerten; und
die HF-Eingangsstufe (804) konfiguriert ist, den Empfang von der vorhergesagten CFI einzustellen, bis ein vordefinierter Zeitraum abgelaufen ist, wenn die Anzahl der OFDM-Symbole keine Übertragungserlaubnis enthält;
wobei der Berechnungsschaltkreis (804) konfiguriert ist, eine CFI vorherzusagen durch:
Bewertung von CFIs von vorherigen Subframes mit einem identischen Subframeindex;
Bewertung von CFIs von den kürzlichen Subframes; oder
Bewertung eines Satzes, der aus den CFIs der neuesten 8 · *K* Subframes besteht, wobei *K* eine ganze Zahl von 1 bis 4 ist.

13. Maschinenlesbarer Speicher, der maschinenlesbare Anweisungen enthält, die bei Ausführung ein Verfahren nach einem der vorhergehenden Ansprüche umsetzen oder eine Vorrichtung nach einem der vorhergehenden Ansprüche realisieren.

## Revendications

1. Procédé de commande d'un dispositif frontal radiofréquence comprenant les étapes suivantes :
prédire (601) un indicateur de format de commande, CFI ;
contrôler (602) le dispositif frontal radiofréquence, RF, pour recevoir un certain nombre de symboles de multiplexage par répartition orthogonale de la fréquence, OFDM, sur la base du CFI prédit ;
déterminer (603) s'il y a lieu d'octroyer une transmission sur la base du nombre de symboles OFDM reçus ; et
contrôler (604) le dispositif frontal RF pour mettre fin à la réception du nombre de symboles OFDM pendant une période de temps prédéfinie, si le nombre de symboles OFDM durant la période de temps prédéfinie ne comprend aucun octroi de transmission :
où le CFI prédit est obtenu en :
évaluant les CFI de sous-trames précédentes ayant un indice de sous-trame identique ;
évaluant les CFI de sous-trames récentes ; ou
évaluant un ensemble constitué des CFI des 8·K sous-trames les plus récentes, où K est un nombre entier compris entre 1 et 4.

2. Procédé selon la revendication 1, dans lequel la prédiction (601) du CFI comprend d'obtenir un ensemble de résultats de CFI décodés sur la base de l'évaluation des CFI à partir des 8·K sous-trames précédentes, récentes ou les plus récentes, le CFI prédit étant :
la moyenne de l'ensemble des résultats de CFI décodés ;
la médiane de l'ensemble des résultats de CFI décodés ; ou
le maximum de l'ensemble des résultats de CFI décodés.

3. Procédé selon l'une quelconque des revendications 1 et 2, dans lequel au moins deux procédés de calcul du CFI prédit sont appliqués.

4. Procédé selon la revendication 3, dans lequel le CFI est prédit en prenant la moyenne des résultats des au moins deux procédés de calcul du CFI prédit.

5. Procédé selon la revendication 3, dans lequel le CFI est prédit en prenant la médiane des résultats des au moins deux procédés de calcul du CFI prédit.

6. Procédé selon l'une quelconque des revendications 1 à 5, comprenant en outre de décoder le nombre de symboles OFDM pour obtenir un CFI réel.

7. Procédé selon la revendication 6, comprenant en outre de stocker le CFI réel dans une mémoire.

8. Procédé selon la revendication 7, comprenant en outre de comparer le CFI prédit au CFI réel.

9. Procédé selon la revendication 8, comprenant en outre que le CFI prédit soit plus petit que le CFI réel, et de récupérer des données manquantes par le biais du gain de codage.

10. Procédé selon la revendication 8, comprenant en outre que le CFI prédit soit plus petit que le CFI réel, et d'obtenir une retransmission des données manquantes au moyen d'une demande de répétition automatique.

11. Procédé selon l'une quelconque des revendications 1 à 8, comprenant en outre d'ajouter une valeur de compensation au CFI prédit pour réduire la probabilité qu'un CFI prédit soit inférieur au CFI réel.

12. Appareil de commande d'un dispositif frontal radiofréquence (804), ledit appareil comprenant :
un dispositif frontal radiofréquence, RF, (804) configuré pour recevoir des transmissions depuis un réseau sans fil ;
un circuit de calcul (803), configuré pour prédire un CFI ;
et une mémoire (802), où un ensemble de CFI précédents sont stockés ;
comprenant en outre que le circuit de calcul (803) soit configuré pour obtenir un CFI prédit ;
le dispositif frontal RF (804) étant configuré pour recevoir une quantité de symboles de multiplexage par répartition orthogonale de la fréquence, OFDM, conformément au CFI prédit ;
le circuit de calcul (803) étant configuré pour évaluer la quantité reçue de symboles OFDM pour un octroi de transmission ; et
le dispositif frontal RF (804) étant configuré pour interrompre la réception depuis le CFI prédit pendant une période de temps prédéfinie, où la quantité de symboles OFDM ne comprend aucun octroi de transmission ;
où le circuit de calcul (804) est configuré pour prédire le CFI en :
évaluant les CFI de sous-trames précédentes ayant un indice de sous-trame identique ;
évaluant les CFI de sous-trames récentes ; ou
évaluant un ensemble constitué des CFI des 8·K sous-trames les plus récentes, où K est un nombre entier compris entre 1 et 4.

13. Support de stockage lisible par machine comprenant des instructions lisibles par machine qui, lorsqu'elles sont exécutées, mettent en oeuvre un procédé ou réalisent un appareil tel que revendiqué dans l'une quelconque des revendications précédentes.
